# EUROPÄISCHE PATENTSCHRIFT

(11) **EP 2 147 205 B1**
(45) Veröffentlichungstag und Bekanntmachung des Hinweises auf die Patenterteilung: **11.07.2012**
(21) Anmeldenummer: 08750061.7
(22) Anmeldetag: 05.05.2008
(51) Int. Cl.: F02D 41/40, F02D 41/00

(54) **VERFAHREN ZUR ZYLINDERGLEICHSTELLUNG EINER BRENNKRAFTMASCHINE**
METHOD FOR CYLINDER SYNCHRONIZATION OF AN INTERNAL COMBUSTION ENGINE
PROCÉDÉ D'ÉQUILIBRAGE DES CYLINDRES D'UN MOTEUR À COMBUSTION INTERNE

(30) Priorität: 04.05.2007 DE 102007020964
(43) Veröffentlichungstag der Anmeldung: 27.01.2010
(73) Patentinhaber: Robert Bosch GmbH, 70442 Stuttgart (DE)
(72) Erfinder: PORTEN, Guido, 71665 Vaihingen/Enz (DE); WOLBER, Jens, 70839 Gerlingen (DE); AMLER, Markus, 71229 Leonberg-Gebersheim (DE); WALZ, Matthias, 75446 Wiernsheim (DE); MENG, Jan-Mathias, 71636 Ludwigsburg (DE); KOENIG, Joerg, 70197 Stuttgart (DE); SCHOTT, Marc, 71696 Moeglingen (DE); CREPIN, Pierre-Yves, 70469 Stuttgart (DE)
(86) Internationale Anmeldenummer: PCT/EP2008/055504
(87) Internationale Veröffentlichungsnummer: WO 2008/135560

(56) Entgegenhaltungen:
- WO-A-01/90557
- WO-A-2005/075806
- DE-B3-102005 001 887

## Beschreibung

### Stand der Technik

Die Erfindung geht aus von einem Verfahren zur Zylindergleichstellung nach Gattung der unabhängigen Ansprüche.

Die Zylindergleichstellung wird bisher bei Systemen mit Benzindirekteinspritzung eingesetzt. Dabei werden die Zylinder durch eine im Schichtbetrieb laufende Adaption basierend auf Unterschieden in den Segmentzeiten bezüglich ihres Momentenbeitrages kraftstoffneutral auf den Gesamtmotor bezogen gleichgestellt, wobei insbesondere eine unterschiedliche Zylinderfüllung keinen Einfluss auf die Gleichstellung hat. Bei der Benzindirekteinspritzung ist die Zylindergleichstellung im lambdageregelten Homogenbetrieb oder Homogen-Mager-Betrieb nicht aktiv, es werden lediglich die Adaptionswerte aus dem Schichtbetrieb übernommen. Bei aktiver Einzelzylinder-Lambdaregelung erfolgt kraftstoffseitig die Regelung auf den vorgegebenen Lambda-Sollwert ohne Berücksichtigung der Momentenwirksamkeit. Daraus kann im Homogenbetrieb bzw. Homogen-Mager-Betrieb eine erhöhte Laufunruhe resultieren.

Verbrennungsmotoren mit direkter Kraftstoffeinspritzung in den Brennraum sowie einer Motorsteuerung zum Darstellen mehrerer Betriebsarten und mehrerer Einspritzsequenzen pro Arbeitsspiel - z. B. Doppeleinspritzung - nehmen an Bedeutung zu. Insbesondere erfordern strahlgeführte Brennverfahren eine hohe Zumessgenauigkeit der Hochdruckeinspritzventile, um alle Vorteile optimal ausnutzen zu können, wie beispielsweise Mehrfacheinspritzung mit extrem kleinen Einzeleinspritzungen. Ein solches Vorgehen erweist sich besonders vorteilhaft für den Start und Warmlauf der Brennkraftmaschine und für das Aufheizen des Katalysators. Die geforderte Zumessgenauigkeit ist vor allem im Bereich der Kleinstmengen nur durch besondere Verfahren darzustellen.

Bei Verbrennungsmotoren, die geschichteten Motorbetrieb ermöglichen, kommt häufig eine so genannte Zylindergleichstellungsfunktion zum Einsatz, die auf Basis der ermittelten Laufunruheterme die Drehmomentanteile der einzelnen Zylinder zum Gesamtdrehmoment gleichstellt. Da im Schichtbetrieb das Drehmoment proportional zur eingespritzten Kraftstoffmasse ist, werden durch dieses Verfahren in einem hohen Maße die Zumesstoleranzen der Einspritzventile ausgeglichen.

Im Homogenbetrieb wird vorzugsweise eine Einzelzylinder-Lambdaregelung zur Gleichstellung des zylinderindividuellen Luft-/Kraftstoffverhältnisses benutzt. Diesem Verfahren sind jedoch enge Grenzen gesetzt. Insbesondere bei höheren Zylinderzahlen und beim Einsatz eines Turboladers ist der Einsatz einer Einzelzylinder-Lambdaregelung nur sehr eingeschränkt möglich. Auch eine nicht symmetrische Zündfolge, z. B. typisch bei 8 Zylindermotoren stellt für dieses Verfahren eine besondere Schwierigkeit dar.

In der DE 198 28 279 A1 ist bereits ein Verfahren zur Gleichstellung zylinderindividueller Drehmomentenbeiträge einer mehrzylindrigen Kraftmaschine gezeigt, bei dem für die Zylindergleichstellung ein Laufunruhesignal herangezogen wird, das sich z. B. in unterschiedlichen Segmentzeiten der Kurbel- oder Nockenwelle ausdrückt. Auf der Basis des Laufunruhesignals werden die Drehmomentenbeiträge der einzelnen Zylinder durch Regeln der Einspritzmenge gleichgestellt. Die Zylindergleichstellungsfunktion ist nur im Schichtbetrieb aktiv. Hingegen wird im Homogenbetrieb oder Homogen-Magerbetrieb ein im Schichtbetrieb aus den Vorsteuerkennfeldern ermittelter Faktor zur Einspritzzeitkorrektur verwendet, die Zylindergleichstellungsfunktion ist aber passiv geschaltet.

Die DE 38 00 176 A1 zeigt ein Verfahren für eine zylinderindividuelle Lambdaregelung, so dass die im Abgas gemessenen Lambdawerte für alle Zylinder im Wesentlichen gleich sind. Zu diesem Zweck wird für jede Einspritzeinrichtung jeweils eine entsprechende Steuerzeit bestimmt. Eine ähnliche zylinderindividuelle Lambdaregelung ist auch in der DE 199 03 721 C1 sowie in der DE 199 09 474 A1 beschrieben.

Ein Trend für den Ottomotor ist der Einsatz der Benzindirekteinspritzung in Kombination mit Turboaufladung. Aufgrund aufwändiger Abgasnachbehandlung wird auf den geschichteten Betrieb verzichtet und nur Homogenbetrieb gefahren. Die Konsequenz ist, dass keines der aktuell verfügbaren Verfahren zur Mengenfehlerkompensation angewendet werden kann.

### Offenbarung der Erfindung

### Vorteile der Erfindung

Erfindungsgemäß ist es vorgesehen, dass zur Erreichung einer möglichst guten Laufruhe die einzelnen Zylinder hinsichtlich ihres Drehmomentenbeitrags gleichgestellt werden, wobei hierzu ein Laufunruhesignal ausgewertet wird, wobei Kraftstoff in mindestens einer Einspritzung in einem Brennraum eines Zylinders eingespritzt wird, und wobei die mindestens eine Einspritzung einen Beitrag zum Drehmoment der Brennkraftmaschine leistet.

Besonders vorteilhaft ist es, dass mit einer Nacheinspritzung während eines Arbeitstakts des Zylinders Kraftstoff in den Brennraum des Zylinders drehmomentneutral hinsichtlich der Auswertung bzw. Auswertealgorithmus der Zylindergleichstellungsfunktionalität eingespritzt wird, und die Nacheinspritzung so bemessen ist, dass das Abgas im wesentlichen einem stöchiometrischen Luft-Kraftstoffgemisch entspricht.

Ein solches Vorgehen hat zudem den Vorteil, dass die Zylindergleichstellung auch in einem homogen Betrieb der Brennkraftmaschine erfolgen kann und nicht nur auf einen Schichtbetrieb der Brennkraftmaschine beschränkt ist. Insbesondere hat dieses Vorgehen den Vorteil, dass eine nachgeschaltete Abgasnachbehandlung auch während einer Zylindergleichstellung in einem optimalen Betriebspunkt arbeiten kann und sich die Abgasqualität nicht verschlechtert.

Weiterhin ist bekannt, dass die Kombination von fett und mager betriebenen Zylindern im nicht gleichgestellten Zustand zu starker thermischer Belastung des Katalysators führen, aufgrund exothermer Reaktionen im Abgastrakt. Durch die erfindungsgemäße Zylindergleichstellung werden solche Zustände auch für den homogenen Betrieb der Brennkraftmaschine in vorteilhafter Weise vermieden.

Ferner wird durch die erfindungsgemäße Gleichstellung insbesondere Abgas und Laufruhe der Betriebsarten mit Mehrfacheinspritzung verbessert.

Durch die in den Unteransprüchen aufgeführten Maßnahmen sind vorteilhafte Weiterbildungen und Verbesserungen des im unabhängigen Anspruch angegebenen Verfahrens möglich.

In einer weiteren vorteilhaften erfindungsgemäßen Ausgestaltung ist es vorgesehen, die drehmomentbestimmende Einspritzung und/oder auch die Nacheinspritzung in mehrere Einspritzungen aufzuteilen. Durch die Aufteilung in mehrere Einspritzung ist es vorteilhaft möglich die Luft-Kraftstoff-Gemisch-Verteilung im Brennraum optimal einzustellen und eine kraftstoffsparende Betriebsweise der Brennkraftmaschine zu ermöglichen.

Ferner ist es auch von Vorteil die drehmomentbestimmenden Einspritzungen im Ansaugtakt und/oder im Verdichtungstakt abzusetzen um bspw. verbrauchsgünstige Gemischverteilungen zu realisieren.

Insbesondere ist es von Vorteil, die erfindungsgemäße Zylindergleichstellung im Homogenbetrieb der Brennkraftmaschine vorzunehmen, wodurch ein aufwändiger Wechsel der Betriebsarten für eine Zylindergleichstellung vermieden wird.

Weiterhin ist es vorteilhaft vorgesehen, dass die Nacheinspritzung (30) so erfolgt, dass eine im Wesentlichen vollständige Verbrennung des in der Nacheinspritzung (30) eingespritzten Kraftstoff möglich ist.

Weiterhin ist es von Vorteil, die Nacheinspritzung später als 30° KW und vorzugsweise vor 180°KW nach dem oberen Totpunkt des Verdichtungstakt (ZOT) abzusetzen.

Besonders vorteilhaft ist es, wenn die Nacheinspritzung so bemessen ist, dass eine bei der Nacheinspritzung in mindestens einen Brennraum der Brennkraftmaschine eingespritzte Kraftstoffmenge größer als ein vorgegebener Schwellwert gewählt wird. Dadurch werden beispielsweise störende Einflüsse von Toleranzen vermieden.

Besonders vorteilhaft ist es, wenn der vorgegebene Schwellwert abhängig von einer Größe gewählt wird, die ein zur Einspritzung des Kraftstoffs in den Brennraum der Brennkraftmaschine verwendetes Einspritzventil, insbesondere ein Magnetventil, charakterisiert. Dadurch wird die Nacheinspritzung beispielsweise an bauartbedingte und/oder toleranzbedingte Eigenschaften des Einspritzventils angepasst, und die Effektivität des erfindungsgemäßen Verfahrens erhöht Zudem wird das Verfahren dadurch auch für preiswerte Magnetventile verfügbar.

Besonders vorteilhaft ist es, wenn der vorgegebene Schwellwert abhängig von einer kleinsten realisierbaren Einspritzmenge des zur Einspritzung des Kraftstoffs in den Brennraum der Brennkraftmaschine verwendeten Einspritzventils, insbesondere des Magnetventils gewählt wird. Dadurch wird sichergestellt, dass das Einspritzventil in seinem zulässigen Betriebsbereich angesteuert wird.

Besonders vorteilhaft ist es, wenn das Abgas in einen in der Brennkraftmaschine angeordneten Katalysator ausgeleitet wird, und der vorgegebene Schwellwert abhängig von mindestens einer Betriebsgröße des Katalysators bestimmt wird. Dadurch wird eine Abgasverschlechterung bezüglich Stickoxid (NOx) durch eine unvollständige Konvertierung des Abgases im Katalysator wirksam vermieden.

Besonders vorteilhaft ist es, wenn als Betriebsgröße des Katalysators ein Katalysatorzustand, beispielsweise die Sauerstoffspeicherfähigkeit (OSC) und/oder eine Katalysatortemperatur gewählt wird. Dadurch wird das Verfahren besonders einfach mit in Steuergeräten für Kraftfahrzeuge schon vorhandenen Betriebskenngrößen des Katalysators umgesetzt.

Besonders vorteilhaft ist es, wenn die Nacheinspritzung in den Brennraum mindestens eines Zylinders der Brennkraftmaschine in mindestens einem Arbeitsspiel des mindestens einen Zylinders der Brennkraftmaschine unterdrückt wird. Dadurch wird, gemittelt über mehrere Arbeitsspiele des Zylinders der Brennkraftmaschine, ein stöchimetrisches Luft- Kraftstoff-Gemisch verwendet, selbst wenn jede einzelne Nacheinspritzung größer als eine zur Erlangung des stöchiometrischen Luft-Kraftstoff-Gemischs erforderliche theoretische Nacheinspritzung ist. Das ist besonders dann von Bedeutung, wenn die theoretische Nacheinspritzung kleiner als die kleinste realisierbare Einspritzmenge des Einspritzventils ist.

Besonders vorteilhaft ist es, wenn, die Nacheinspritzung in weniger als allen Brennräume der Brennkraftmaschine erfolgt. Dadurch wird, gemittelt über alle Zylinder der Brennkraftmaschine, ein stöchimetrisches Luft-Kraftstoff-Gemisch verwendet, selbst wenn jede einzelne Nacheinspritzung größer als die zur Erlangung des stöchiometrischen Luft-Kraftstoff-Gemischs erforderliche theoretische Nacheinspritzung ist Das ist besonders dann von Bedeutung, wenn die theoretische Nacheinspritzung kleiner als die kleinste realisierbare Einspritzmenge des Einspritzventils ist.

Besonders vorteilhaft ist es, wenn das Verfahren bei vorliegen mehrerer Zylinderbänke für jede dieser Zylinderbänke durchgeführt wird. Dadurch wird gemittelt über alle Zylinder, deren Brennraum an dem selben Abgasrohr angeordnet sind, ein stöchiometrisches Luft-Kraftstoff-Gemisch verwendet, selbst wenn jede einzelne Nacheinspritzung größer als die zur Erlangung des stöchiometrischen Luft-Kraftstoff-Gemischs erforderliche theoretische Nacheinspritzung ist. Das ist besonders dann von Bedeutung, wenn die theoretische Nacheinspritzung kleiner als die kleinsten realisierbaren Einspritzmenge des Einspritzventils ist.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in den Zeichnungen dargestellt sind.

Es zeigen:
- Figur 1: schematisch Einspritzung und Zündung einer Brennkraftmaschine im Normalbetrieb ;

- Figur 2: schematisch eine erste Ausführungsform einer erfindungsgemäße Zylindergleichstellung mit Nacheinspritzung;
- Figur 3: ein Ablaufschema einer erfindungsgemäßen Zylindergleichstellung;
- Figur 4: ein Ablaufschema einer zweiten Ausführungsform der erfindungsgemäßen Zylindergleichstellung; und
- Figur 5: schematisch eine zweite Ausführungsform einer erfindungsgemäße Zylindergleichstellung mit Nacheinspritzung.
- Figur 6: ein Zusammenhang zwischen einer Katalysatortemperatur und einer Sauerstoffspeicherfähigkeit (OSC).

### Beschreibung

Die Erfindung hebt im Wesentlichen darauf ab, eine Mengenfehlerkompensation der eingespritzten Kraftstoffmasse auch für den Einsatz bei Benzindirekteinspritzung mit Turboaufladung und Homogenbetrieb sowie Motoren mit höheren Zylinderzahlen und/oder auch mit nicht symmetrischer Zündfolge zu ermöglichen.

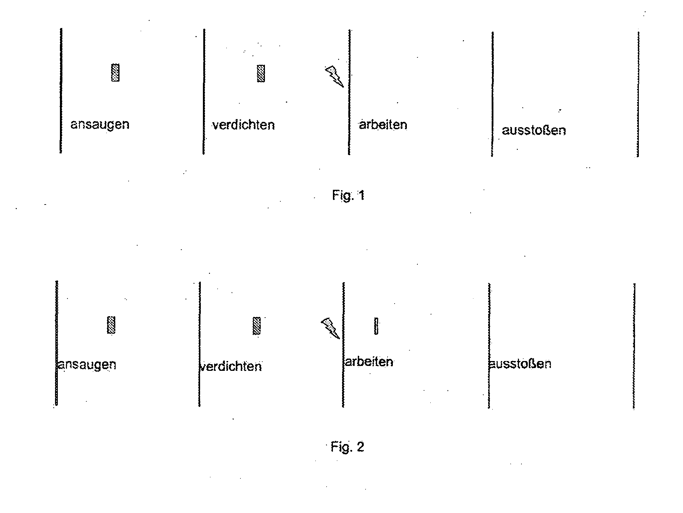

In Figur 1 und 2 sind die Takte eines Arbeitsspiels einer 4-Takt-Brennkraftmaschine dargestellt, mit einem Ansaugtakt 1, einem Verdichtungstakt 2, einem Arbeitstakt 3 und einem Ausstoßtakt 4. Eine erste Einspritzsequenz 10 erfolgt im Ansaugtakt 1 (Sequenz z. B. mindestens 1 bis zu 3 Einspritzungen) und zweite Einspritzsequenz 20 im Verdichtungstakt 2 (Sequenz z. B. mindestens 1 bis zu 3 Einspritzungen) mit einer nachfolgenden Zündung 50 des sich bildenden Kraftstoff-Luftgemischs in der Nähe des oberen Totpunkt des Verdichtungstakts 2. Das sich einstellende Drehmoment hängt hierbei im Wesentlichen von der durch die beiden Einspritzsequenzen 10, 20 eingespritzten Kraftstoffmenge ab. Die ersten beiden Einspritzsequenzen 10, 20 dienen im wesentlichen zur Bereitstellung eines homogen mageren Luft-Kraftstoffgemisch, welches vorzugsweise für die Zylindergleichstellung benötigt wird.

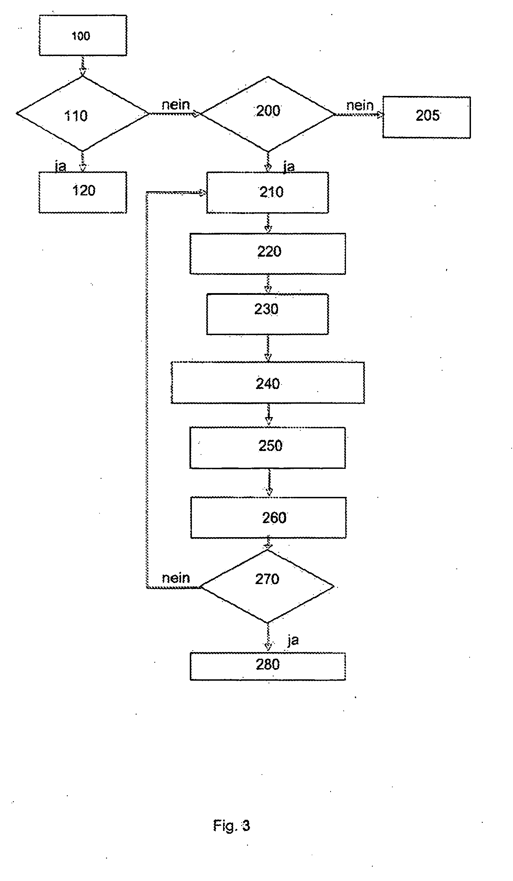

In Figur 3 ist ein Ablaufschema einer ersten Ausführungsform einer typischen Zylindergleichstellung dargestellt In einem Schritt 100 wird die Adaption gestartet, wobei in einem Schritt 110 überprüft wird, ob bereits eine Adaption erfolgt. Wenn "Ja" wird die weitere Verarbeitung in einem Schritt 120 beendet. Wenn keine Adaption gestartet ist, wird in einem Schritt 200 überprüft, ob sich Betriebsparameter der Brennkraftmaschinen in einem geeigneten Adaptionsbereich befinden, liegen die Betriebsparameter außerhalb eines solchen Bereichs wird die Adaption ein einem Schritt 205 beendet.

Ein geeigneter Adaptionsbereich kann beispielsweise in einem mittleren Drehzahlbereich bei geringer Last vorliegen. Ausgenommen werden vorzugsweise Bereiche mit hoher Drehzahl und hoher Lastanforderungen. Diese Bereiche können ohne Weiteres brennkraftmaschinen-spezifisch angepasst werden.

Ansonsten wird in einem Schritt 210 eine Mehrfacheinspritzung der Brennkraftmaschine eingeleitet, wobei die erste Einspritzsequenz 10 und die zweite Einspritzsequenz 20 so berechnet werden, dass die Brennkraftmaschine in einem Homogenen Magerbetrieb läuft. In Summe wird die Gesamt-Kraftstoffmasse der ersten beiden Einspritzsequenzen 10, 20 der Forderung nach einem zulässigen Brennraumlambda (1 < Lambda im Brennraum < x) genügen müssen. D.h. die Menge der letzten Nacheinspritzung 30 muss derart berechnet werden, dass ein brennfähiges und zugleich ausreichend mageres Brennraumlambda (1 < Lambda im Brennraum < x) verbleibt. Somit kann zum einen der Algorithmus der Zylindergleichstellung über das Laufruhesignal zur Mengenfehlerkompensation eingesetzt werden, zum anderen ist eine sichere Entflammung sichergestellt. Im Schritt 230 kann eine zweite Einspritzsequenz 20 aktiviert werden und Kraftstoff im Verdichtungstakt 2 der Brennkraftmaschine mit entsprechend berechneten Winkellagen eingespritzt werden. Im Schritt 230 wird ein Laufunruhesignal ausgewertet. Im Schritt 240 werden geeignete Einspritzparameter bzw. Korrekturwerte ermittelt, die geeignet sind die Laufruhe der Brennkraftmaschine zu verbessern. Im Schritt 250 werden diese Korrekturwerte abgespeichert und im Schritt 260 als Adaptionswerte eingerechnet, wobei eine erneute erste und/oder zweite Einspritzsequenz 10, 20 mit den berechneten Adaptionswerten erfolgt.

Wird in einem nachfolgenden Schritt 270 noch keine ausreichende Laufruhe festgestellt, wird die Adaption mit Schritt 210 neu gestartet. Die Adaption wird in einem Schritt 280 beendet, wenn die Laufruhe als ausreichend erachtet wird.

In Figur 1 ist eine Einspritzabfolge gezeigt, die eine Zylindergleichstellung während eines Magerbetriebs einer Brennkraftmaschine ermöglicht. Während in einem HomogenBetrieb einer Brennkraftmaschine das erzeugte Drehmoment im Wesentlichen durch die zugeführte Luftmasse beeinflusst wird, also "luftgesteuert" ist, ist im Magerbetrieb die eingespritzte Kraftstoffmasse das drehmomentbestimmende Element (Kraftstoffgeführt). Zur Zylindergleichstellung wird daher typischerweise von einem homogenen Betrieb der Brennkraftmaschine auf einen Mager-Betrieb und/oder Schichtbetrieb umgestellt.

Da jedoch übliche Abgasnachbehandlungen ein Luft-Kraftstoffverhältnis in der Nähe von Lambda = 1 benötigen, kommt in diesen Fahrzeugen eine Zylindergleichstellung nicht in Betracht.

Ferner würde ein mageres Gemisch (typischerweise Lambda = 1,1 bis 1,2) eine Abgasverschlechterung bezüglich NOx zur Folge haben, da 3-Weg-Katalysatoren zur vollständigen Konvertierung ein stöchiometrisches Gemisch benötigen.

Erfindungsgemäß ist es daher, wie in Figur 2 dargestellt, vorgesehen, in dem Arbeitstakt 3 der Brennkraftmaschine eine Nacheinspritzung 30 abzusetzen, die so bemessen ist, dass der insgesamt eingespritzte Kraftstoff - also Summe aller Einspritzungen in der vorliegenden Taktfolge Ansaug- Verdichtungs- und Arbeitstakt - ein Luft-Kraftstoffgemisch um Lambda = 1 bildet. Ein Absetzen einer weiteren Kraftstoffmenge durch die Nacheinspritzung 30 in einem geeigneten Kurbelwellenwinkelbereich im Arbeitstakt 3 trägt praktisch nicht mehr zum Drehmoment der Brennkraftmaschine bei, und ist für die Laufruhe der Brennkraftmaschine bzw. auch für die Auswertung der Laufunruhe anhand des Laufunruhesignals zu vernachlässigen.

Die Erfindung hebt somit im Wesentliche darauf ab, nach der Zündung 50 eine Nacheinspritzung abzusetzen, mit dem Ziel in Summe ein stöchiometrisches Gesamtgemisch zu generieren, d.h. ein abgasneutraler Summenlambdawert (Lambda=1).

Die Lage dieser Einspritzung muss vorzugsweise in einem Winkelbereich erfolgen, in dem kein nennenswerter Drehmomentenbeitrag erfolgt, der für die Zylindergleichstellung relevant wäre. Vorzugsweise in einem Bereich später als 30°KW nach Zünd-OT. D.h. die laufruhesignalbasierte Zylindergleichstellungsfunktionalität basiert im wesentlichen auf dem Drehmomentenbeitrag der mageren Grundeinspritzung aufgeteilt in einer ersten und ggf. zweiten Einspritzsequenz 10, 20 sowie einer Nacheinspritzung 30.

Kriterien für die Festlegung des Winkelbereiches der Nacheinspritzung sind vorzugsweise die folgenden:
1. Forderung nach vollständiger Verbrennung (Abgas, Laufruhe) als spätest möglicher Einspritzwinkel-Winkel
2. Forderung nach einer Querwirkungsfreiheit bezüglich des Algorithmus der Zylindergleichstellung als frühest möglicher Winkel.

Als Querwirkungsfreiheit ist hier im Wesentlichen der Einfluss der Nacheinspritzung auf die Auswertung der Laufunruhe zu verstehen. Erfolgt die Nacheinspritzung zu früh, erzeugt auch die Nacheinspritzung einen nennenswerten Drehmomentbeitrag, der sich in der Auswertung des Laufunruhesignals bemerkbar macht. Die Nacheinspritzung sollte daher so erfolgen, dass ein evtl. vorhandener Drehmomentenbeitrag der Nacheinspritzung für die Auswertung/Algorithmus der Zylindergleichstellung zu vernachlässigen ist.

Die Nacheinspritzung darf jedoch auch nicht zu spät erfolgen, damit eine vollständige Verbrennung des nacheingespritzten Kraftstoff möglich ist.

Diese Kriterien werden vorzugsweise für eine Nacheinspritzung in einem Kurbelwellenwinkelbereich von 30° bis 180° nach Zünd-OT erreicht. Wobei je nach Ausgestaltung der Brennkraftmaschine durchaus auch andere Bereiche in Frage kommen können, solange die oben genannte Kriterien erfüllt sind.

Im Normalbetrieb, das heißt stöchiometrischer Motorbetrieb findet typischerweise die Einspritzung in den Saughub (saugsynchron) statt. Optional wird vermehrt auch eine saugsynchrone Mehrfach-Einspritzung angewendet, um der Russbildung und der Ölverdünnung entgegen zu wirken. Weiterhin ist auch im Normalbetrieb eine Einspritzung in den Kompressionshub/Verdichtungstakt 2 möglich.

Um jedoch das beschriebene Adaptionsverfahren anwenden zu können, wird nun eine zusätzliche Nacheinspritzung in den Arbeitstakt (nach ZOT) abgesetzt. Ziel dieser Einspritzung ist es, das magere Grundgemisch (typischerweise Lambda = 1,1 bis 1,2) auf einen stöchiometrischen Wert (Lambda=1) zu bringen. Die Berechnung der Aufteilungsverhältnisse der Einzeleinspritzungen muss entsprechend dieser Forderung erfolgen. Insgesamt sind die applikativen Parameter der Einzeleinspritzungen, wie beispielsweise Einspritzwinkel, Aufteilungsverhältnisse, Zündwinkel, etc. entsprechend den Brennverfahrensanforderungen wie Zündwilligkeit, Laufruhe, Emissionen, Katalysatortemperaturen in der Motorsteuerungs-Software zu berücksichtigen.

Die Anwendung des erfindungsgemäßen Verfahrens erfolgt analog für Brennkraftmaschinen mit mehr als einem Zylinder, wobei die Brennräume, Zylinder und Einspritzventile zur Einspritzung von Kraftstoff in dem Fachmann bekannter Weise in der Brennkraftmaschine angeordnet sind. In diesem Falle wird im Schritt 210 ein erster Zylinder zur Nacheinspritzung 30 ausgewählt. Optional erfolgt dann zwischen dem Schritt 240 und dem Schritt 250 in einem zusätzlichen Schritt, der in Figur 3 nicht dargestellt ist, die Wahl eines oder mehrerer weiterer Zylinder zur Nacheinspritzung 30. Dadurch wird die Durchmischung des Abgases im Vergleich zur Umsetzung der Nacheinspritzung 30 in nur dem ersten Zylinder verbessert.

In einer zweiten Ausführungsform wird das erfindungsgemäße Verfahren für die Verwendung von Einspritzventilen erweitert, die eine vorgegebene Kraftstoffmenge erst zuverlässig und reproduzierbar einspritzen können, wenn die vorgegebene Kraftstoffmenge größer als ein Schwellwert S ist. Beispielsweise werden aufgrund des Preisvorteils gegenüber anderen Ventilen häufig Magnetventile eingesetzt. Eine Charakteristik von Magnetventilen ist jedoch, dass bei gleicher vorgegebener Kraftstoffmenge nicht immer zuverlässig oder reproduzierbar bei jeder Ansteuerung des Magnetventils die gleiche Kraftstoffmenge eingespritzt wird. Diese Charakteristik von Magnetventilen ist bauartbedingt und/oder verursacht durch Fertigungstoleranzen.

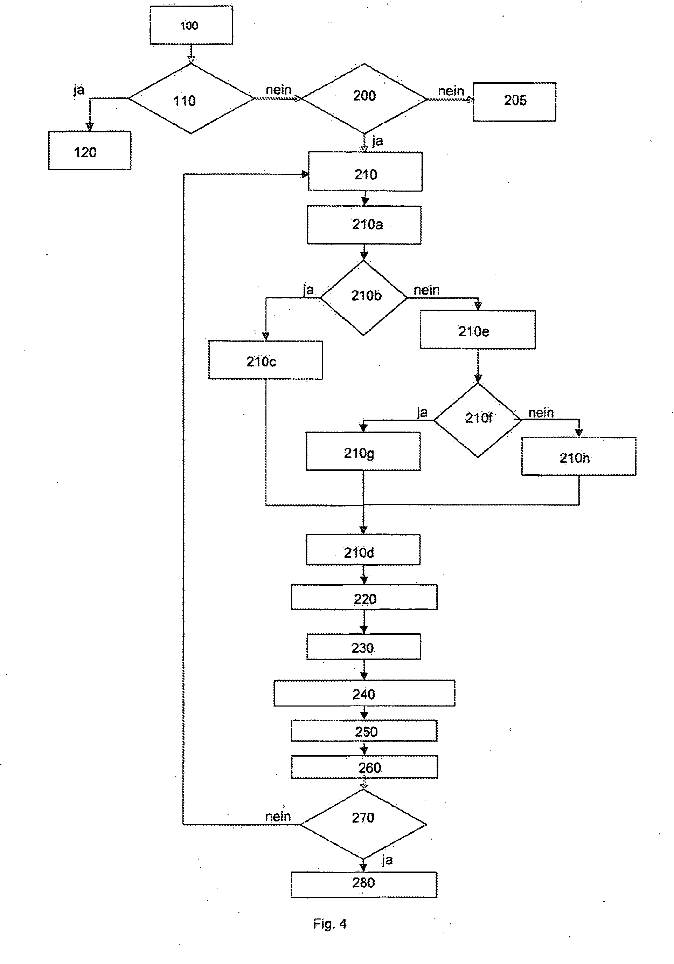

Figur 4 stellt ein Ablaufschema der zweiten Ausführungsform dar, das im Kern dem Ablaufschema der ersten Ausführungsform aus Figur 3 entspricht.

Der Schritt 100 der zweiten Ausführungsform entspricht dem Schritt 100 der ersten Ausführungsform. Zusätzlich wird in der zweiten Ausführungsform im Schritt 100 eine zweite Soll-Kraftstoffmenge SK2 mit dem Wert Null initialisiert.

Die Schritte 110, 120, 200, 205, 210, 220, 230, 240, 250, 260, 270 und 280 unterscheiden sich in der zweiten Ausführungsform nicht von den Schritten der ersten Ausführungsform und haben daher in Figur 4 das gleiche Bezugszeichen wie in Figur 3.

Wie in der ersten Ausführungsform wird im Schritt 210 die Menge der Nacheinspritzung 30 ermittelt. Anschließend folgt gemäß Figur 4 auf den Schritt 210 ein Schritt 210a.

Bei dem Schritt 210a wird ein Schwellwert S abhängig von einer Größe gewählt, die ein zur Einspritzung des Kraftstoffs in den Brennraum der Brennkraftmaschine verwendetes Einspritzventil, insbesondere eine Magnetventil charakterisiert. Beispielsweise wird der vorgegebene Schwellwert S gleich der kleinsten realisierbaren Einspritzmenge des zur Einspritzung des Kraftstoffs in den Brennraum der Brennkraftmaschine verwendeten Einspritzventils gewählt. Die kleinste realisierbare Einspritzmenge ist beispielsweise 3mg.

Anschließend wird bei einem Schritt 210b geprüft, ob die aus der ersten Ausführungsform bekannte Menge der Nacheinspritzung 30, die im Folgenden auch als Nacheinspritzmenge bezeichnet wird, größer als der Schwellwert S ist Ist dies der Fall, wird zum Programmpunkt 210c verzweigt. Anderenfalls zum Programmpunkt 210e.

Im Schritt 210c wird eine erste Soll-Kraftstoffmenge SK1 abhängig von der Nacheinspritzmenge ermittelt. Die erste Soll-Kraftstoffmenge SK1 wird beispielsweise gleich der Nacheinspritzmenge gewählt. Anschließend wird zu einem Schritt 210d verzweigt.

Bei dem Schritt 210d wird die Nacheinspritzung 30 gemäß der ersten Soll-Kraftstoffmenge SK1 umgesetzt und das erfindungsgemäße Verfahren anschließend mit Schritt 220 fortgesetzt.

Beim Schritt 210e wird die zweite Soll-Kraftstoffmenge SK2 abhängig von der Nacheinspritzmenge verändert. Beispielsweise wird die zweite Soll-Kraftstoffmenge SK2 um die Menge der Nacheinspritzung 30 erhöht.

Bei einem Schritt 210f, der dem Schritt 210e folgt, wird geprüft, ob die zweite Soll-Kraftstoffmenge SK2 größer als der Schwellwert S ist. Dadurch ergibt sich eine vorgegebene Anzahl von Arbeitsspielen ohne Nacheinspritzung 30 automatisch. Falls ja, wird zu einem Schritt 210g verzweigt. Falls nein zu einem Schritt 210h.

Im Schritt 210g wird die erste Soll-Kraftstoffmenge SK1 abhängig von der zweiten Soll-Kraftstoffmenge SK2 ermittelt. Beispielsweise wird die erste Soll-Kraftstoffmenge SK1 gleich der zweiten Soll-Kraftstoffmenge SK2 gewählt. Die zweite Soll-Kraftstoffmenge SK2 wird danach auf den Wert Null gesetzt. Anschließend wird das erfindungsgemäße Verfahren bei Schritt 210d fortgesetzt.

Im Schritt 210h wird die erste Soll-Kraftstoffmenge SK1 auf Null gesetzt, das heißt es erfolgt keine Einspritzung. Anschließend wird das erfindungsgemäße Verfahren bei Schritt 210d fortgesetzt.

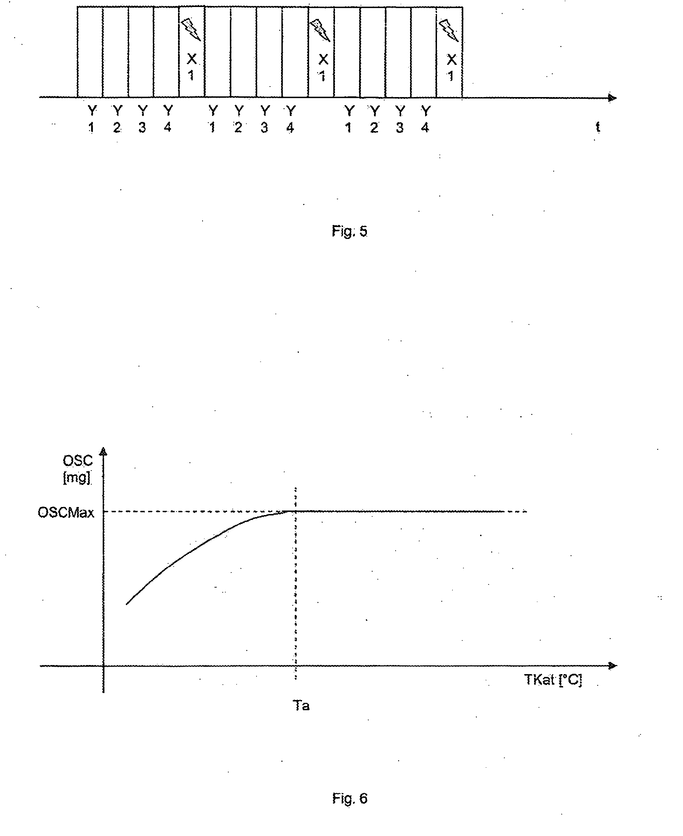

Figur 5 stellt eine mögliche zeitliche Verteilung der Arbeitszyklen beispielsweise für den Schwellwert S = 4mg und die erste Soll-Kraftstoffmenge SK1 = 0,275mg dar. Wie in Figur 5 dargestellt, wird für 1 Arbeitspiel X1 die Nacheinspritzung 30 durchgeführt. Das Arbeitsspiel X1 mit Nacheinspritzung 30 ist als Rechteck mit kleinem Blitz dargestellt. Die Arbeitsspiele ohne Nacheinspritzung sind als Rechtecke ohne Blitz dargestellt und für 4 Arbeitszyklen mit Y1 bis Y4 bezeichnet. Figur 5 zeigt auch eine beispielsweise periodische Wiederholung der Arbeitsspiele Y1 bis Y4 sowie X1. Die Wiederholung ist im Allgemeinen für sich ändernde Schwellwerte S nicht periodisch.

Bei einer Brennkraftmaschine mit mehr als einem Zylinder kann das erfindungsgemäße Verfahren für jeden Zylinder einzeln angewendet werden. Im Falle der zweiten Ausführungsform wird für jeden Zylinder eine erste Soll-Kraftstoffmenge SK1 und eine zweite Soll-Kraftstoffmenge SK2 ermittelt.

Alternativ oder ergänzend dazu kann in einer vierten Ausführungsform die zweite Soll-Kraftstoffmenge SK2 als Summe der Nacheinspritzmenge aller Zylinder ermittelt werden. Dadurch wird die Nacheinspritzung 30 in dem Zylinder realisiert, der sich zu dem Zeitpunkt im Arbeitstakt befindet, zu dem die zur Nacheinspritzung 30 ermittelte zweite Soll-Kraftstoffmenge SK2 den Schwellwert S überschreitet. Beispielsweise wird bei einer Brennkraftmaschine mit 4 Zylindern, dem Schwellwert S=1mg und einer Soll-Kraftstoffmenge SK1=0,275mg in drei Zylinder der Brennkraftmaschine nicht eingespritzt. Erst im Arbeitstakt des vierten Zylinders wird der Schwellwert S=1mg überschritten und in den vierten Zylinder eingespritzt.

Ergänzend dazu kann das erfindungsgemäße Verfahren bei Vorliegen mehrerer Zylinderbänke für jede dieser Zylinderbänke durchgeführt werden. Dazu werden die Zylinder der selben Zylinderbank gemeinsam betrachtet und das erfindungsgemäße Verfahren entsprechend angewandt.

Falls die Brennkraftmaschine einen Katalysator umfasst wird die Nacheinspritzung 30 in einer Modifikation aller Ausführungsbeispiele, abhängig von mindestens einer Betriebsgröße des Katalysators bestimmt. Beispielsweise wird als Betriebsgröße des Katalysators ein Katalysatorzustand wie eine Sauerstoffspeicherfähigkeit (OSC) und/oder eine Katalysatortemperatur TKat gewählt. Beispielsweise wird die Katalysatortemperatur TKat als Maß für die Sauerstoffspeicherfähigkeit (OSC) verwendet. Die Sauerstoffspeicherfähigkeit (OSC) steigt dabei wie aus Figur 6 ersichtlich mit steigender Katalysatortemperatur TKat zuerst an, um sich dann mit fallendem Gradienten einem maximalen Wert OSCMax von beispielsweise 400mg anzunähern. Ein für den Betrieb des Katalysators kritischer Bereich niedriger Sauerstoffspeicherfähigkeit (OSC) liegt beispielsweise unterhalb einer Anspringtemperatur Ta, ab der der Katalysator seine volle Wirksamkeit entfaltet. Beispielsweise ist die Anspringtemperatur Ta 450°C. Bei dieser Anspringtemperatur Ta hat die Sauerstoffspeicherfähigkeit (OSC) den maximalen Wert von beispielsweise 400mg sicher erreicht. Die Nacheinspritzung 30 wird dabei abhängig von der Katalysatortemperatur TKat immer dann unterdrückt, wenn die Katalysatortemperatur TKat unterhalb der Anspringtemperatur Ta, beispielsweise kleiner als 450°C ist. Die Anspringtemperatur Ta wird beispielsweise in einer Applikationsphase für den jeweiligen Katalysator individuell beispielsweise auf einem Prüfstand ermittelt, derart, dass sie beispielsweise die minimal ermittelte Katalysatortemperatur Ta darstellt, bei der die maximale Sauerstoffspeicherfähigkeit (OSC) erstmals erreicht wurde.

## Patentansprüche

1. Verfahren zur Zylindergleichstellung einer Brennkraftmaschine,
bei dem zur Erreichung einer möglichst guten Laufruhe eine Zylindergleichstellung
der Zylinder hinsichtlich ihres Drehmomentenbeitrags erfolgt,
wobei hierzu ein Laufunruhesignal ausgewertet wird,
wobei Kraftstoff in mindestens einer Einspritzung (10, 20, 30) in einem Brennraum eines Zylinders eingespritzt wird,
wobei die mindestens eine Einspritzung (10, 20) einen Beitrag zum Drehmoment der Brennkraftmaschine leistet, **dadurch gekennzeichnet, dass** in einer Nacheinspritzung (30) während eines Arbeitstakts (3) des Zylinders Kraftstoff in den Brennraum des Zylinders drehmomentenneutral bezüglich der Auswertung des Laufruhesignals eingespritzt wird,
dass die Nacheinspritzung (30) so bemessen ist, dass das Abgas im Wesentlichen einem stöchiometrischen Luft-Kraftstoffgemisch entspricht.

2. Verfahren nach Anspruch 1, bei dem die Einspritzung (10, 20) und/oder Nacheinspritzung (30) in mehrere Einspritzungen aufgeteilt ist.

3. Verfahren nach Anspruch 1 oder 2, bei dem die Einspritzungen (10, 20), die einen Beitrag zum Drehmoment leisten in einem Ansaugtakt und/oder Verdichtungstakt der Brennkraftmaschine eingespritzt werden.

4. Verfahren nach mindestens einem der vorhergehenden Ansprüchen, bei dem die Zylindergleichstellung im Homogenbetrieb der Brennkraftmaschine erfolgt.

5. Verfahren nach mindestens einem der vorhergehenden Ansprüchen, bei dem die Nacheinspritzung (30) so erfolgt, dass eine im Wesentlichen vollständige Verbrennung des in der Nacheinspritzung (30) eingespritzten Kraftstoff möglich ist.

6. Verfahren nach mindestens einem der vorhergehenden Ansprüchen, bei dem die Nacheinspritzung später als ein Kurbelwellenwinkel von 30° nach dem oberen Totpunkt des Verdichtungstakt (2) erfolgt.

7. Verfahren nach mindestens einem der vorhergehenden Ansprüche, bei dem die Nacheinspritzung früher als ein Kurbelwellenwinkel von 180° nach dem oberen Totpunkt des Verdichtungstakt (2) erfolgt.

8. Verfahren nach einem der vorherigen Ansprüche, **dadurch gekennzeichnet, dass** die Nacheinspritzung (30) so bemessen ist, dass eine bei der Nacheinspritzung (30) in mindestens einen Brennraum der Brennkraftmaschine eingespritzte Kraftstoffmenge größer als ein vorgegebener Schwellwert (S) gewählt wird.

9. Verfahren nach Anspruch 8, **dadurch gekennzeichnet, dass** der vorgegebene Schwellwert (S) abhängig von einer Größe gewählt wird, die ein zur Einspritzung des Kraftstoffs in den Brennraum der Brennkraftmaschine verwendetes Einspritzventil, insbesondere ein Magnetventil, charakterisiert.

10. Verfahren nach Anspruch 9, **dadurch gekennzeichnet, dass** der vorgegebene Schwellwert (S) abhängig von einer kleinsten realisierbaren Einspritzmenge eines zur Einspritzung des Kraftstoffs in den Brennraum der Brennkraftmaschine verwendeten Einspritzventils, insbesondere eines Magnetventils, gewählt wird.

11. Verfahren nach einem der Ansprüche 8 bis 10, bei dem das Abgas in einen in der Brennkraftmaschine angeordneten Katalysator ausgeleitet wird, und die Nacheinspritzung (30) abhängig von mindestens einer Betriebsgröße des Katalysators bestimmt wird.

12. Verfahren nach Anspruch 11, wobei als Betriebsgröße des Katalysators ein Katalysatorzustand, beispielsweise die Sauerstoffspeicherfähigkeit (OSC) und/oder eine Katalysatortemperatur gewählt wird.

13. Verfahren nach einem der Ansprüche 2 bis 12, **dadurch gekennzeichnet, dass** nach einer vorgegebenen Anzahl von Nacheinspritzungen (30) eine nachfolgende Nacheinspritzung (30) in den Brennraum mindestens eines Zylinders der Brennkraftmaschine in mindestens einem Arbeitsspiel des mindestens einen Zylinders der Brennkraftmaschine unterdrückt wird.

14. Verfahren nach einem der Ansprüche 2 bis 13, **dadurch gekennzeichnet**, die Nacheinspritzung in weniger als alle Brennräume der Brennkraftmaschine erfolgt.

15. Verfahren nach einem der vorhergehenden Ansprüche **dadurch gekennzeichnet, dass** das Verfahren bei Vorliegen mehrerer Zylinderbänke für mindestens eine Zylinderbank, insbesondere jede dieser Zylinderbänke durchgeführt wird.

## Claims

1. Method for cylinder equalization in an internal combustion engine,
in which method, to attain the best possible running smoothness, cylinder equalization of the cylinders with regard to the torque contribution thereof is carried out,
wherein for this purpose a running roughness signal is evaluated,
wherein fuel is injected, in at least one injection (10, 20, 30), into a combustion chamber of a cylinder,
wherein the at least one injection (10, 20) makes a contribution to the torque of the internal combustion engine, **characterized in that**,
in a post-injection (30) during a working stroke (3) of the cylinder, fuel is injected into the combustion chamber of the cylinder in a torque-neutral fashion with regard to the evaluation of the running smoothness signal,
**in that** the post-injection (30) is configured such that the exhaust gas substantially corresponds to a stoichiometric air/fuel mixture.

2. Method according to Claim 1, in which the injection (10, 20) and/or post-injection (30) is divided into a plurality of injections.

3. Method according to Claim 1 or 2, in which the injections (10, 20) which make a contribution to the torque are injected in an intake stroke and/or compression stroke of the internal combustion engine.

4. Method according to at least one of the preceding claims, in which the cylinder equalization is carried out in the homogeneous operating mode of the internal combustion engine.

5. Method according to at least one of the preceding claims, in which the post-injection (30) is carried out such that a substantially complete combustion of the fuel injected in the post-injection (30) is possible.

6. Method according to at least one of the preceding claims, in which the post-injection is carried out later than a crankshaft angle of 30° after top dead centre of the compression stroke (2).

7. Method according to at least one of the preceding claims, in which the post-injection is carried out earlier than a crankshaft angle of 180° after top dead centre of the compression stroke (2).

8. Method according to one of the preceding claims, **characterized in that** the post-injection (30) is configured such that a fuel quantity injected into at least one combustion chamber of the internal combustion engine during the post-injection (30) is selected to be greater than a predefined threshold value (S).

9. Method according to Claim 8, **characterized in that** the predefined threshold value (S) is selected as a function of a variable which characterizes an injection valve, in particular solenoid valve, used for injecting the fuel into the combustion chamber of the internal combustion engine.

10. Method according to Claim 9, **characterized in that** the predefined threshold value (S) is selected as a function of a smallest injection quantity that can be realized by an injection valve, in particular solenoid valve, used for injecting the fuel into the combustion chamber of the internal combustion engine.

11. Method according to one of Claims 8 to 10, in which the exhaust gas is discharged into a catalytic converter arranged in the internal combustion engine, and the post-injection (30) is determined as a function of at least one operating variable of the catalytic converter.

12. Method according to Claim 11, wherein a catalytic converter state, for example the oxygen storage capacity (OSC) and/or a catalytic converter temperature, is selected as an operating variable of the catalytic converter.

13. Method according to one of Claims 2 to 12, **characterized in that**, after a predefined number of post-injections (30), a subsequent post-injection (30) into the combustion chamber of at least one cylinder of the internal combustion engine is suppressed in at least one working cycle of the at least one cylinder of the internal combustion engine.

14. Method according to one of Claims 2 to 13, **characterized in that** the post-injection is carried out in fewer than all of the combustion chambers of the internal combustion engine.

15. Method according to one of the preceding claims, **characterized in that**, if multiple cylinder banks are present, the method is carried out for at least one cylinder bank, in particular for each of said cylinder banks.

## Revendications

1. Procédé d'équilibrage des cylindres d'un moteur à combustion interne, dans lequel, pour obtenir un fonctionnement aussi régulier que possible, on effectue un équilibrage des cylindres en termes de leur contribution au couple, un signal de marche irrégulière étant à cet effet analysé, du carburant étant injecté dans au moins une injection (10, 20, 30) dans une chambre de combustion d'un cylindre,
l'au moins une injection (10, 20) fournissant une contribution au couple du moteur à combustion interne,
**caractérisé en ce que**
dans une post-injection (30), pendant un temps de travail (3) du cylindre, du carburant est injecté dans la chambre de combustion du cylindre de manière neutre en termes de couple par rapport à l'analyse du signal de fonctionnement régulier,
et **en ce que** la post-injection (30) est dimensionnée de telle sorte que le gaz d'échappement corresponde sensiblement à un mélange stoechiométrique d'air et de carburant.

2. Procédé selon la revendication 1, dans lequel l'injection (10, 20) et/ou la post-injection (30) sont divisées en plusieurs injections.

3. Procédé selon la revendication 1 ou 2, dans lequel les injections (10, 20), qui contribuent au couple, sont injectées dans un temps d'admission et/ou un temps de compression du moteur à combustion interne.

4. Procédé selon au moins l'une quelconque des revendications précédentes, dans lequel l'équilibrage des cylindres a lieu en mode de fonctionnement homogène du moteur à combustion interne.

5. Procédé selon au moins l'une quelconque des revendications précédentes, dans lequel la post-injection (30) a lieu de telle sorte qu'une combustion sensiblement complète du carburant injecté dans la post-injection (30) soit possible.

6. Procédé selon au moins l'une quelconque des revendications précédentes, dans lequel la post-injection a lieu plus tard qu'un angle de vilebrequin de 30° après le point mort haut du temps de compression (2).

7. Procédé selon au moins l'une quelconque des revendications précédentes, dans lequel la post-injection a lieu plus tôt qu'un angle de vilebrequin de 180° après le point mort haut du temps de compression (2).

8. Procédé selon l'une quelconque des revendications précédentes, **caractérisé en ce que** la post-injection (30) est dimensionnée de telle sorte qu'une quantité de carburant injectée dans au moins une chambre de combustion du moteur à combustion interne lors de la post-injection (30) soit choisie supérieure à une valeur seuil prédéfinie (S).

9. Procédé selon la revendication 8, **caractérisé en ce que** la valeur seuil prédéfinie (S) est choisie en fonction d'une grandeur qui caractérise une soupape d'injection utilisée pour l'injection du carburant dans la chambre de combustion du moteur à combustion interne, notamment une électrovanne.

10. Procédé selon la revendication 9, **caractérisé en ce que** la valeur seuil prédéfinie (S) est choisie en fonction d'une quantité d'injection minimale réalisable d'une soupape d'injection utilisée pour l'injection du carburant dans la chambre de combustion du moteur à combustion interne, notamment d'une électrovanne.

11. Procédé selon l'une quelconque des revendications 8 à 10, dans lequel le gaz d'échappement est dévié dans un catalyseur disposé dans le moteur à combustion interne, et la post-injection (30) est déterminée en fonction d'au moins une grandeur de fonctionnement du catalyseur.

12. Procédé selon la revendication 11, dans lequel un état du catalyseur, par exemple la capacité d'accumulation d'oxygène (OSC) et/ou une température du catalyseur, est choisi en tant que grandeur de fonctionnement du catalyseur.

13. Procédé selon l'une quelconque des revendications 2 à 12, **caractérisé en ce qu'**après un nombre prédéterminé de post-injections (30), une post-injection suivante (30) dans la chambre de combustion d'au moins un cylindre du moteur à combustion interne est supprimée dans au moins un mouvement de travail de l'au moins un cylindre du moteur à combustion interne.

14. Procédé selon l'une quelconque des revendications 2 à 13, **caractérisé en ce que** la post-injection a lieu dans moins de toutes les chambres de combustion du moteur à combustion interne.

15. Procédé selon l'une quelconque des revendications précédentes, **caractérisé en ce que** le procédé est mis en oeuvre en présence de plusieurs rangées de cylindres pour au moins une rangée de cylindres, en particulier pour chacune de ces rangées de cylindres.
